**Europäisches Patentamt**

**European Patent Office**

**Office européen des brevets**

(11) Numéro de publication: **0 254 788**
**A1**

# DEMANDE DE BREVET EUROPEEN

(21) Numéro de dépôt: **86401683.7**

(22) Date de dépôt: **28.07.86**

(51) Int. Cl.4: **B23Q 39/02**

(43) Date de publication de la demande:
**03.02.88 Bulletin 88/05**

(84) Etats contractants désignés:
**AT BE CH DE GB IT LI NL SE**

(71) Demandeur: **LUREM S.A.**
**La Haute Chapelle B.P. no 1**
**F-61700 Domfront(FR)**

(72) Inventeur: **De Varreux, Jean-Loup**
**3, rue Jeanne d'Arc**
**F-78100 Saint-Germain en Laye(FR)**

(74) Mandataire: **Moncheny, Michel et al**
**c/o Cabinet Lavoix 2 Place d'Estienne**
**d'Orves**
**F-75441 Paris Cedex 09(FR)**

(54) **Machines à bois à plusieurs fonctions.**

(57) Cette machine à bois comprend un bâti mobile ayant la forme d'un prisme droit, monté à rotation sur un bâti fixe (A) autour d'un axe passant par le centre des bases dudit bâti mobile (B). Chacune des faces latérales de ce dernier délimite une table de travail ($T_2$) associée à un outil ($O_2$). L'entraînement d'un outil est assuré automatiquement lorsque celui-ci est amené dans sa position d'utilisation par rotation du bâti mobile (B) autour dudit axe. De plus, cette machine comporte un dispositif d'aspiration intégré, adapté pour aspirer automatiquement les particules de bois produites par l'outil amené en position d'utilisation, ces particules de bois étant canalisées vers une gaine d'aspiration commune (46) disposée à l'intérieur du bâti fixe (A).

FIG.2

EP 0 254 788 A1

Xerox Copy Centre

## Machines à bois à plusieurs fonctions

La présente invention concerne les machines à bois à plusieurs fonctions.

A titre d'exemple, elle concerne les machines susceptibles de remplir les fonctions suivantes: scie circulaire, raboteuse-dégauchisseuse, toupie, tenonneuse-mortaiseuse et chantourneuse.

Dans les machines à bois classiques à plusieurs fonctions, les outils correspondant à chacune de ces dernières sont disposés sur un seul et même plan de travail. Cette disposition qui implique l'utilisation d'un même plan de travail pour effectuer différentes opérations, cause de multiples problèmes.

Un premier problème consiste dans le fait que, lorsque l'on souhaite utiliser un outil particulier, il est nécessaire d'escamoter ou de démonter les autres outils présents sur la table de travail ainsi que leur organe de protection afin de dégager cette dernière autour de l'outil considéré. Mis à part la perte de temps engendrée par ces manipulations, cette obligation de faire place nette autour de l'outil qui doit être utilisé sur le moment, amène l'utilisateur à abandonner les réglages effectués sur les autres outils, ce qui engendrera, par la suite, une nouvelle perte de temps, si cet utilisateur souhaite réutiliser les mêmes outils avec les mêmes réglages.

Le fait d'associer différents outils à une même table de travail pose un autre problème qui est lié à la répartition de ces outils sur cette table. En effet, pour des raisons évidentes, d'encombrement propre à chacun des outils, ces derniers doivent être répartis en différents points de la table de travail. Ainsi, suivant la fonction choisie sur la machine, l'utilisateur devra se déplacer autour de cette der nière pour se trouver dans la position adéquate, propre à l'outil considéré.

De tels déplacements s'avèrent rapidement fastidieux et nécessitent un espace libre notable autour de la machine, entraînant ainsi un encombrement important.

Par ailleurs, en raison des impératifs de sécurité liés à la présence d'outils coupants en rotation, chacun de ces derniers doit être équipé, d'un organe protecteur.

Ainsi, à chaque changement d'outil, l'utilisateur doit démonter l'organe protecteur des outils qui ne sont pas employés. De telles manipulations ne font d'une part, qu'accroître les pertes de temps déjà citées et incitent rapidement, d'autre part, l'utilisateur à négliger la mise en place de ces organes protecteurs.

Afin de remédier aux inconvénients précités, la présente invention a pour but de fournir une machine à bois à plusieurs fonctions qui permette une simplification des manipulations lors du changement de l'outil de travail, qui ne décourage pas l'utilisateur d'employer les systèmes de sécurité prévus sur cette machine, qui ne nécessite qu'un nombre restreint de positions de travail ergonomiques et qui enfin, soit aussi compacte que possible.

Ainsi, l'invention a pour objet une machine à bois à plusieurs fonctions, comportant un bâti fixe, au moins deux outils, susceptibles chacun d'être mis en oeuvre sélectivement par l'intermédiaire d'un dispositif d'entraînement **correspondant, et un bâti**, mobile à rotation sur le bâti fixe autour d'un axe principal et comportant au moins deux tables de travail, chacune de ces dernières étant associée à au moins un outil et étant susceptible d'être amenée dans une position d'utilisation par rotation du bâti mobile autour de l'axe principal, caractérisée en ce qu'elle comprend un moteur relié à chacun des dispositifs d'entraînement des outils,fixé sur le bâti fixe, l'arbre de sortie de ce moteur s'étendant parallèlement à l'axe principal, de telle façon que ce dernier soit situé entre la position d'utilisation des tables de travail et ledit arbre du moteur.

Suivant d'autres caractéristiques de l'invention :

-le centre de gravité de l'ensemble mobile, formé par le bâti mobile et les élements qu'il supporte, est situé à peu près sur ledit axe principal.

-le bâti mobile est à peu près symétrique par rotation d'un angle déterminé autour de l'axe principal.

-le bâti mobile a la forme d'une prisme droit dont les bases, ayant chacune la forme d'un triangle à peu près équilatéral, sont traversées en leur centre par l'axe principal et dont au moins deux faces latérales délimitent chacune une table de travail.

-sur son côté voisin du moteur, le bâti mobile est supporté à rotation sur le bâti fixe au moyen d'un palier composite comportant au moins trois galets montés à rotation sur le bâti fixe et disposés à intervalles angulaires à peu près égaux sur un chemin de roulement circulaire, coaxial à l'axe principal, porté par le bâti mobile.

-la machine comprend un dispositif d'aspiration intégré adapté pour collecter automatiquement les déchets de bois produits au niveau de l'outil amené en position d'utilisation.

-chaque outil est associé à un collecteur indépendant dont l'extrémité aval, opposée à l'outil correspondant, débouche à l'extérieur du bâti mobile en regard du bâti fixe, les extrémités aval de ces collecteurs étant réparties radialement sur un même cercle autour de l'axe principal de telle façon que celle de ces dernières, associée à l'outil disposé en position d'utilisation, soit voisine et coaxiale à l'extrémité d'une gaine d'aspiration commune portée par le bâti fixe.

-le machine est munie, sur un flanc, d'une table auxiliaire adaptée pour déplacer un plateau suivant trois dimensions, cette table auxiliaire comprenant un premier chariot vertical, monté coulissant horizontalement sur le bâti fixe, un deuxième chariot horizontal, monté mobile positivement en translation verticale sur le premier chariot, et le plateau monté coulissant sur le deuxième chariot, parallèlement à l'axe principal.

-la machine comporte un mandrin de mortaisage, escamotable à l'intérieur du bâti mobile.

L'invention sera mieux comprise à la lecture de la description qui va suivre, d'un mode de réalisation donné uniquement à titre d'exemple et faite en se référant aux dessins annexés, sur lesquels :

　-la Fig.1 est une vue en élévation latérale représentant schématiquement une machine suivant l'invention;

　-la Fig.2 est une vue d'ensemble, en perspective et avec arrachement, d'un mode de réalisation d'une machine à bois à plusieurs fonctions, conforme à l'invention;

　-la Fig.3 est une vue partielle en élévation frontale, à plus grande échelle et avec arrachement, de la machine illustrée à la Fig.2, la raboteuse-dégauchisseuse étant en position de travail;

　-la Fig.4 est une vue partielle, en coupe suivant la ligne 4-4 de la Fig.3;

　- la Fig.5 est une vue partielle avec arrachement, en coupe suivant la ligne 5-5 de la Fig.4;

　-la Fig.6 est une vue partielle, en coupe suivant la ligne 6-6 de la Fig.5;

　-la Fig.7 est une vue partielle, en plan du dessus de la machine, la scie circulaire étant en position de travail;

　-la Fig.8 est une vue schématique illustrant la disposition des courroies d'entraînement des différents outils à l'intérieur du bâti mobile, la raboteuse-dégauchisseuse étant en position de travail;

　-la Fig.9 est une vue partielle en plan du dessus de la machine, la raboteuse-dégauchisseuse étant en position de travail;

　-la Fig.10 est une vue partielle en élévation frontale de la machine, illustrant la table de travail de la toupie;

　-la Fig.11 est une vue partielle avec arrachement, en coupe partielle suivant une ligne perpendiculaire à l'axe principal X-X, illustrant la structure de la table auxiliaire;

　-les Fig.12A,12B,12C sont des vues partielles analogues à celles de la Fig.4, illustrant la disposition des gaines d'aspiration des réseaux collecteurs indépendants associés respectivement à la scie circulaire, à la raboteuse-dégauchisseuse, et à la toupie;

　-la Fig.13 est une vue partielle en élévation du dessus de la machine, illustrant la toupie en position de travail;

　-la Fig.14 est une vue analogue à celle de la Fig.13, la machine étant équipée d'un dispositif de reproduction de contour;

　-la Fig.15 est une vue analogue à celle de la Fig.11, la machine étant équipée du dispositif de reproduction de contour de la Fig.14;

　-la Fig.16 est une vue analogue à celle de la Fig.5, la machine étant équipée d'un mandrin de tenonnage/mortaisage; et

　-la Fig.17 est une vue partielle en coupe suivant la ligne 17-17 de la Fig.16.

## Description d'un mode de réalisation:

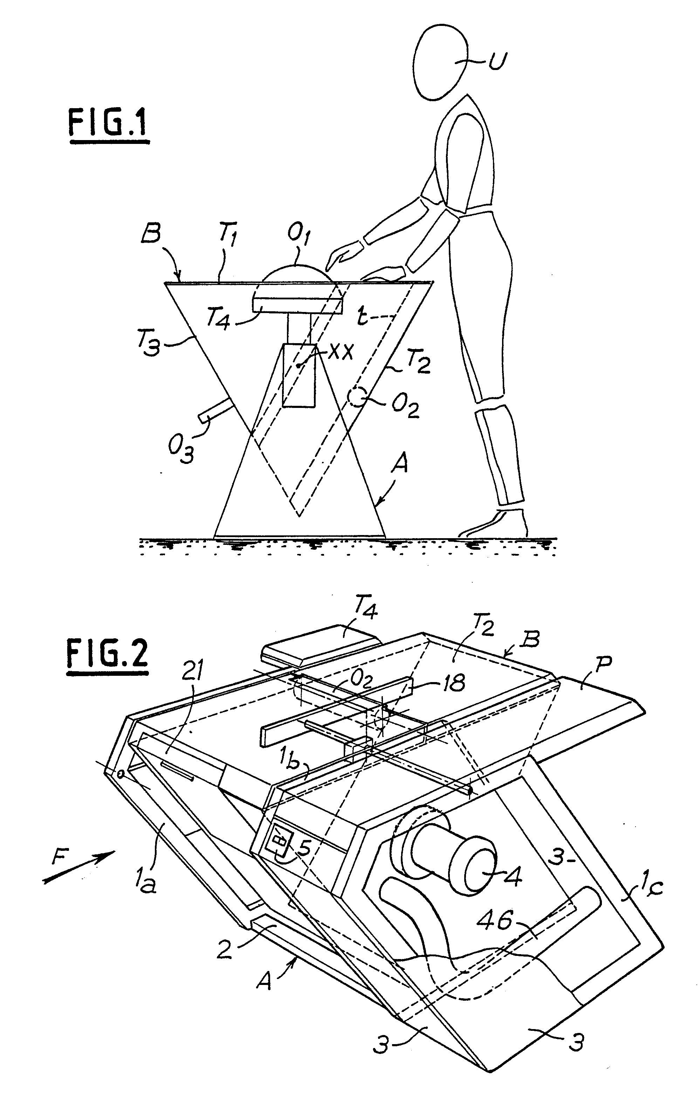

En se référant au schéma de principe illustré sur la Fig.1, on voit que, suivant l'invention, la machine à bois comprend un bâti fixe A muni de deux flancs espacés l'un de l'autre, entre lesquels un bâti mobile B est monté à rotation autour d'un axe principal X-X. Le bâti mobile B a, dans le mode de réalisation préféré de l'invention, la forme d'un prisme triangulaire droit. Les flancs de ce bâti B formés par les bases du prisme, ont chacun la forme d'un triangle à peu près équilatéral et l'axe principal X-X de rotation passe par leur centre, de sorte que le bâti mobile est à peu près symétrique par rotation de 120° autour dudit axe principal.

Chacune des faces latérales du bâti mobile B est une table de travail $T_1, T_2, T_3$ associée à un outil, respectivement une scie circulaire $O_1$, une raboteuse-dégauchisseuse $O_2$ et une toupie $O_3$. Le bâti mobile B est, en outre, muni d'un tunnel t de rabotage qui traverse ledit bâti B sous la raboteuse-dégauchisseuse $O_2$.

On voit sur cette même figure, qu'une table auxiliaire $T_4$, susceptible de déplacer une pièce à ouvrager suivant trois directions orthogonales deux à deux, est prévue sur un des flancs du bâti fixe A, cette table auxiliaire servant à la mise en oeuvre de plusieurs outils comme cela sera décrit dans la suite.

On remarquera en outre que la forme prismatique du bâti mobile ménage, sur la face avant de la machine et sous la table de travail disposée dans la position horizontale d'utilisation, un dégagement pour les jambes d'un utilisateur U.

Dans le mode de réalisation représenté sur la Fig.2, le bâti fixe A réalisé en tubes soudés, comprend trois cadres 1a, 1b, 1c espacés et disposés parallèlement les uns aux autres. Ces cadres ont chacun à peu près la forme d'un parallélogramme incliné vers l'avant de la machine.

Les cadres 1a, 1b, 1c sont reliés les uns aux autres par des traverses 2 qui assurent la rigidité de l'ensemble du bâti fixe A. Les trois cadres 1 sont alignés et le bâti mobile B qui a, à peu près, la forme d'une prisme droit est monté à rotation entre le cadre gauche 1a et le cadre du milieu 1b (en regardant la machine de face, c'est-à-dire dans la direction de la flèche F de la Fig.2). L'espace compris entre les cadres du milieu et de droite du bâti fixe A, respectivement 1b, 1c est fermé, d'une part, par un plateau de travail annexe P disposé horizontalement sur la machine, dont la longueur correspond à celle des tables de travail du bâti mobile et, d'autre part, par un capotage formé de tôles protectrices 3 qui s'adaptent devant, derrière et sur le côté de la machine, formant ainsi un logement dans lequel est reçu un moteur électrique 4.

Pour supprimer la présence d'angles aigüs, qui risqueraient de nuire à l'utilisateur, les arêtes du bâti mobile B qui joignent deux tables de travail adjacentes, sont tronquées de façon à délimiter des faces à peu près parallèles chacune à la table de travail opposée correspondante. De même, sur la face avant de la machine, les arêtes du bâti fixe A susceptibles d'être situées dans le prolongement desdites faces du bâti mobile B, sont tronquées de la façon précédemment décrite et la face comprise entre les cadres du milieu 1b et de droite 1c du bâti fixe A, résultant de cette troncature, reçoit un tableau 5 de commande de la machine.

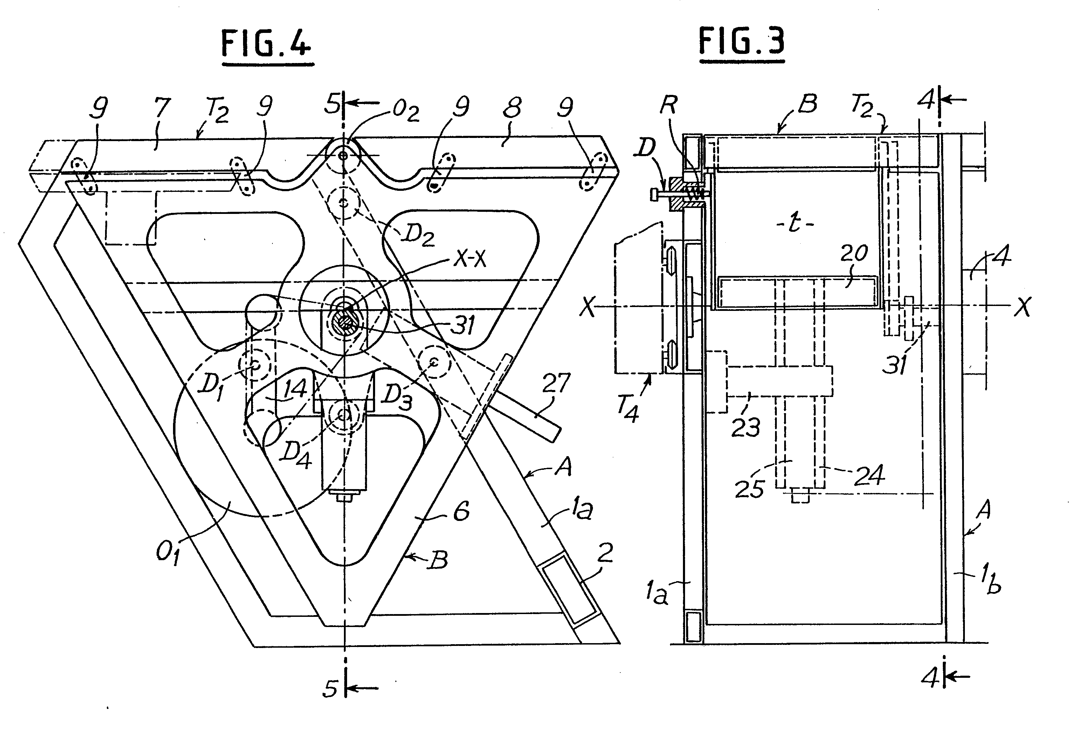

Les flancs 6 du bâti mobile B (Fig.4), formés par les bases du prisme droit, et les tables de travail $T_1$ et $T_3$ associées respectivement à la scie circulaire $O_1$ et à la toupie $O_3$, sont dans ce mode de réalisation, moulés en une seule pièce, par exemple, en fonte d'aluminium. La table de travail $T_2$ de la raboteuse-dégauchisseuse $O_2$ est formée de deux demi-tables comprenant une table d'entrée 7 et une table de sortie 8 de longeurs à peu près égales. Ces demi-tables 7 et 8 sont disposées au voisinage et de part et d'autre de l'arbre de la raboteuse-dégauchisseuse $O_2$ qui est monté à rotation entre les flance 6 du bâti mobile B. Ces demi-tables 7,8 sont articulées chacune sur le bâti mobile B, de façon connue en soi, au moyen de quatre biellettes 9 formant deux à deux des parallélogrammes articulés.

Cet agencement permet ainsi de faire varier la saillie que fait l'arbre $O_2$ de la raboteuse-dégauchisseuse sur sa table de travail $T_2$ afin d'ajuster l'amplitude de dégauchissage souhaitée en abaissant, de manière appropriée, la demi-table 7,la demi-table 8 de sortie étant articulée sur le bâti mobile B de façon à s'étendre dans le plan tangent à la généra trice circulaire délimitée par les arêtes des lames de coupe de l'outil en rotation. Les moyens de réglage de ces demi-tables 7,8, articulées sur le bâti mobile B, peuvent être continus ou discontinus en faisant appel à des dispositifs connus en soi tels que, par exemple, un levier solidaire d'une bielle au niveau de l'extrémité de chaque demi-table, ce levier traversant une ouverture ménagée dans ladite extrémité de façon à présenter un prolongement susceptible d'être saisi manuellement, des moyens classiques de blocage de ce levier étant en outre prévus.

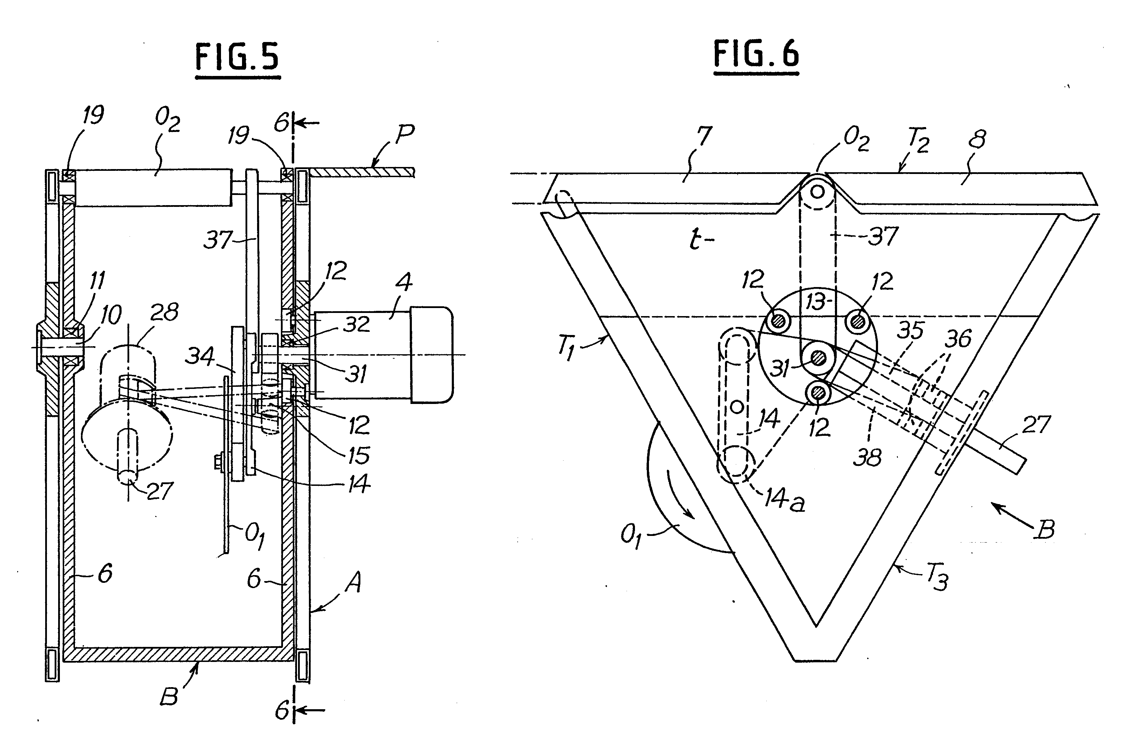

Le bâti mobile B est monté à rotation sur le bâti fixe A autour de l'axe principale X-X, d'une part, au moyen d'un bout d'arbre 10, solidaire du cadre gauche $1_a$ du bâti fixe A (Fig.5), qui tourillonne dans un roulement 11 porté par le flanc 6 correspondant du bâti mobile B et, d'autre part, au moyen d'un palier composite (Fig.5 et 6) comportant trois galets 12 montés mobiles à rotation sur le bâti fixe A et disposés suivant des intervalles angulaires à peu près égaux sur la périphérie intérieure d'une ouverture 13 circulaire, coaxiale à l'axe principal X-X, ménagée dans le flanc 6 droit du bâti mobile B pour délimiter un chemin de roulement.

Pour assurer le blocage du bâti mobile B dans la position d'utilisation de chacune des tables de travail $T_1$, $T_2$, $T_3$, un doigt D est prévu au niveau de la partie supérieure du cadre gauche 1a du bâti fixe A (Fig.3). Ce doigt est sollicité, en direction du bâti mobile B, au moyen d'un ressort R (Fig.3) de façon à pouvoir pénétrer dans un orifice $D_1$, $D_2$, $D_3$, associé à chaque table de travail, respectivement $T_1$, $T_2$, $T_3$. Ces orifices sont formés sur le flanc 6 gauche du bâti mobile B et sont répartis augulairement sur un même cercle dont le centre est traversé par l'axe principal X-X de telle façon que, lorsqu'une table de travail est dans sa position d'utilisation, le doigt sollicité par le ressort, pénètre dans l'orifice correspondant et bloque ainsi le bâti mobile B dans la position requise. Ce dispositif à doigt et ressort peut être complété par un micro-contact (non représenté) qui assure l'interruption du fonctionnement du moteur 4 au moment où l'utilisateur extrait le doigt de l'orifice du bâti mobile B dans lequel il est engagé, lorsque cet utilisateur désire modifier l'orientation dudit bâti mobile B.

En se référant aux Fig.5,6 et 7, on voit que la scie circulaire $O_1$ est disposée dans le bâti mobile B, de telle façon que son axe soit parallèle à l'axe principal X-X. Cette scie circulaire $O_1$, solidaire d'une poulie d'entraînement 14a, est supportée à rotation à une extrémité d'un bras 14 monté oscillant en son milieu sur une partie en saillie 15 formée sur la face intérieure du flanc 6 droit du bâti mobile B.

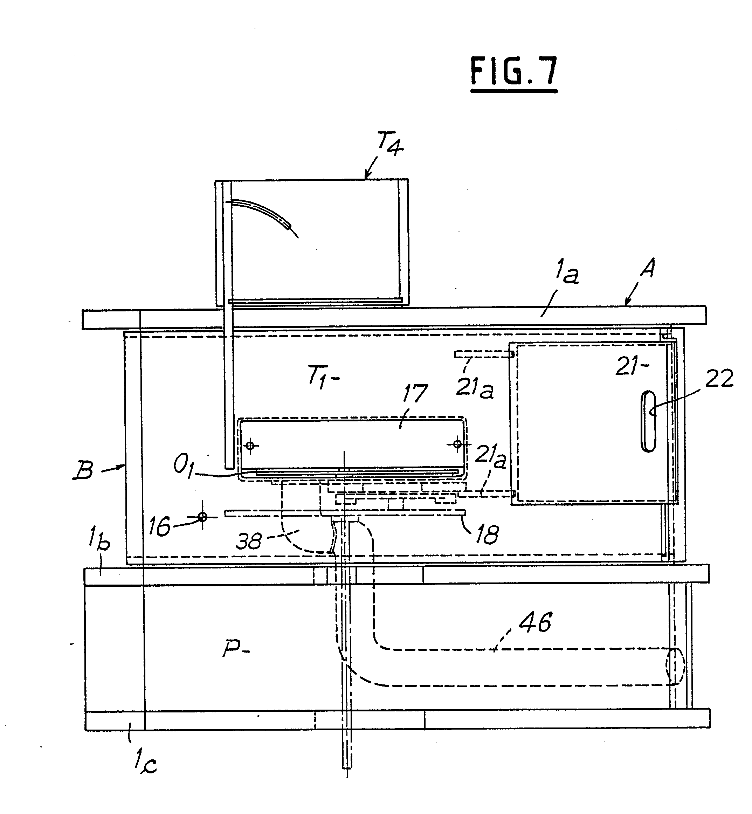

De façon connue en soi, la table de travail $T_1$, associée a la scie circulaire $O_1$, est munie d'une fente de dimension appropriée pour ménager un passage à cette dernière (Fig.7).

A l'aide de moyens de réglage classiques (non représentés), la scie circulaire $O_1$, est susceptible d'être amenée par rotation du bras 14 qui la porte sur le bâti mobile, à faire saillie sur la table de travail $T_1$ à laquelle elle est associée, suivant une hauteur requise par l'utilisateur. Ces moyens de réglage comportent, par exemple et de façon connue en soi, un levier solidaire à une extrémité du bras 14, et à son autre extrémité, d'un boulon dans lequel est introduit une vis sans fin susceptible d'être action née au moyen d'un volant amovible. A cet effet, la table de travail $T_1$ comporte un trou 16 dans lequel une partie dudit volant amovible est susceptible d'être introduite pour venir en prise avec ladite vis sans fin des moyens de réglage de la scie circulaire $O_1$. On remarquera, en outre, sur la Fig.7 que cette dernière est équipée d'un carter protecteur 17 fixé sur la table de travail $T_1$ et qu'il est prévu un guide 18 réglable et amovible porté par le bâti fixe A, au voisinage du plateau de travail annexe P.

Ainsi que cela a été décrit plus haut, l'arbre $O_2$ de la raboteuse-dégauchisseuse s'étend transversalement à la table de travail $T_2$ à laquelle il est associé. Cette raboteuse-dégauchisseuse $O_2$ est disposée parallèlement à l'axe principal X-X et tourillonne à chacune de ses extrémités dans un roulement 19 porté par chaque flanc 6 du bâti mobile B (Fig.5).

Pour assurer la fonction de rabotage, un tunnel de rabotage $t$ associé à une table de rabotage 20 (Fig.3) réglable, est prévu sous la table de travail $T_2$ de dégauchissage. Cette table de rabotage 20 s'étend parallèlement à ladite table de travail $T_2$ et a une largeur correspondant à la longueur utile de l'arbre $O_2$ de la raboteuse-dégauchisseuse. Par ailleurs, pour permettre l'accès ou la sortie de pièces en bois dans le tunnel de rabotage, les tables de travail $T_1$ et $T_3$ situées chacune à une extrémité longitudinale de la table de rabotage 20, sont munies d'un tiroir 21 qui ferme une ouverture correspondante du tunnel de rabotage $t$ lorsque celui-ci n'est pas utilisé ou lorsque la table de travail qu'il complète est utilisée. Chaque tiroir 21 (Fig. 2, 7 et 10) est muni sur un de ses côtés de deux tiges 21a parallèles, destinées chacune à pénétrer dans un orifice complémentaire de la table de travail $T_1$ ou $T_2$ correspondante afin de fermer une extrémité du tunnel de rabotage $t$ et de compléter le plan de travail délimité par la table à laquelle il est associé.

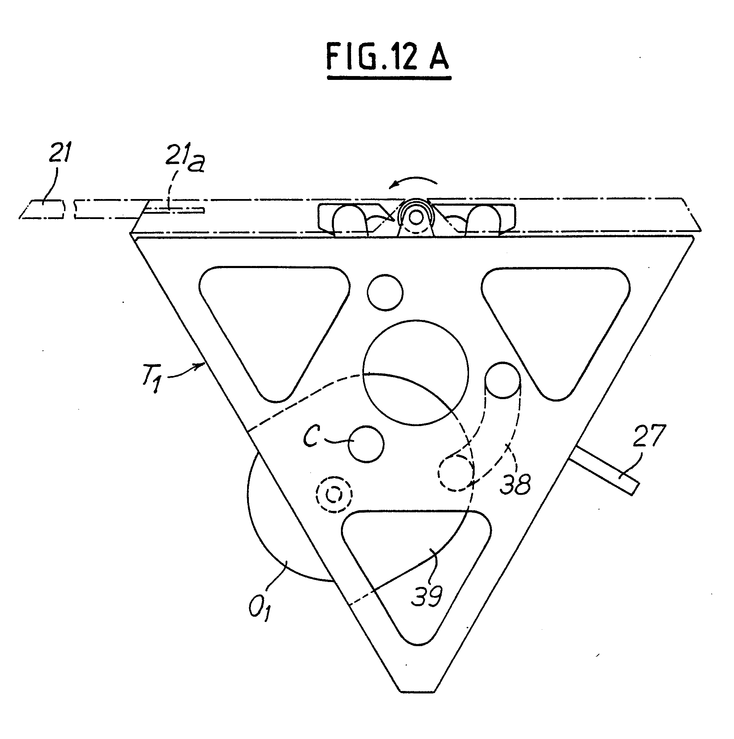

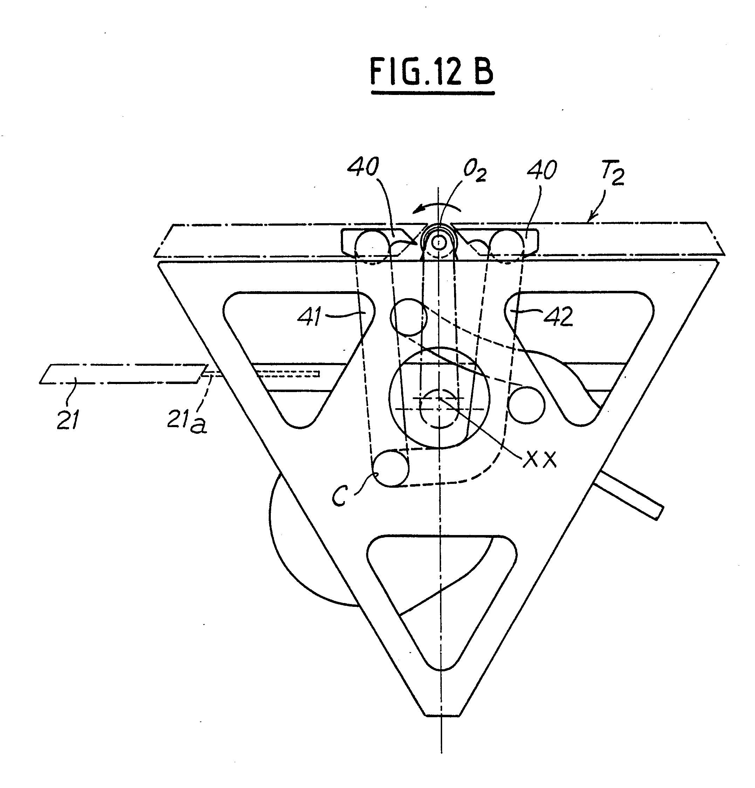

En outre, chaque tiroir 21 est muni d'une ouverture 22 oblongue destinée à servir de prise pour l'utilisateur et est susceptible de faire office de rallonge en venant s'adapter sur une des extrémités de la table de travail $T_2$ de dégauchissage (Fig.12A) ou de la table de rabotage 20 (Fig.12B).

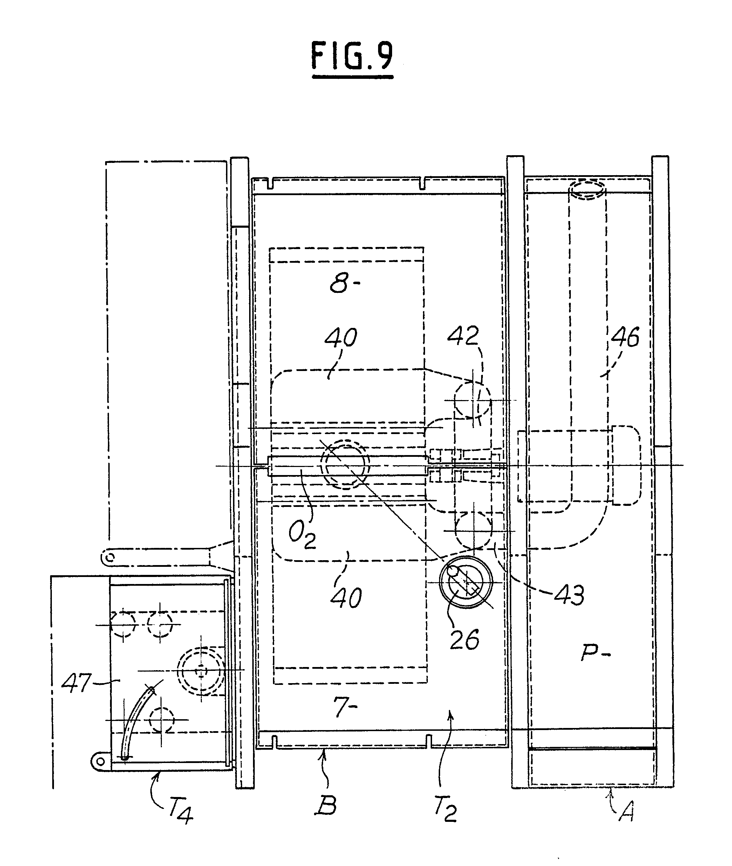

La table de rabotage 20 est portée dans le bâti mobile B, par une potence 23 qui fait saillie sur la face intérieure du flanc 6 gauche dudit bâti mobile (Fig.3). Les moyens de réglage de la table de rabotage qui permettent de la rapprocher ou de l'eloigner de la raboteuse-dégauchisseuse $O_2$, comprennent un tube creux 24 fileté intérieurement et solidaire de la potence 23 à l'intérieur duquel est introduite une vis sans fin 25 (Fig.3) dont une extrémité est montée à rotation sous la table de rabotage 20. Le dispositif de commande de ces moyens de réglage est connu en soi et est figuré en traits mixtes sur la Fig.3. Ce dispositif de commande comprend une tige dont une extrémité est susceptible d'être mise en prise avec un volant amovible 26, adapté pour coopérer avec un orifice correspondant de la table de travail $T_2$ (Fig.9), l'autre extrémité de la tige portant un engrenage susceptible d'entraîner une chaine qui passe autour d'un autre engrenage prévu sur l'extrémité correspondante de la vis sans fin 25 afin de pouvoir visser ou dévisser cette dernière à l'aide du volant amovible disposé sur la table de travail $T_2$ de dégauchissage et ajuster ainsi la hauteur libre entre la raboteuse-dégauchisseuse et la table de rabotage en fonction de l'épaisseur de la pièce de bois à raboter.

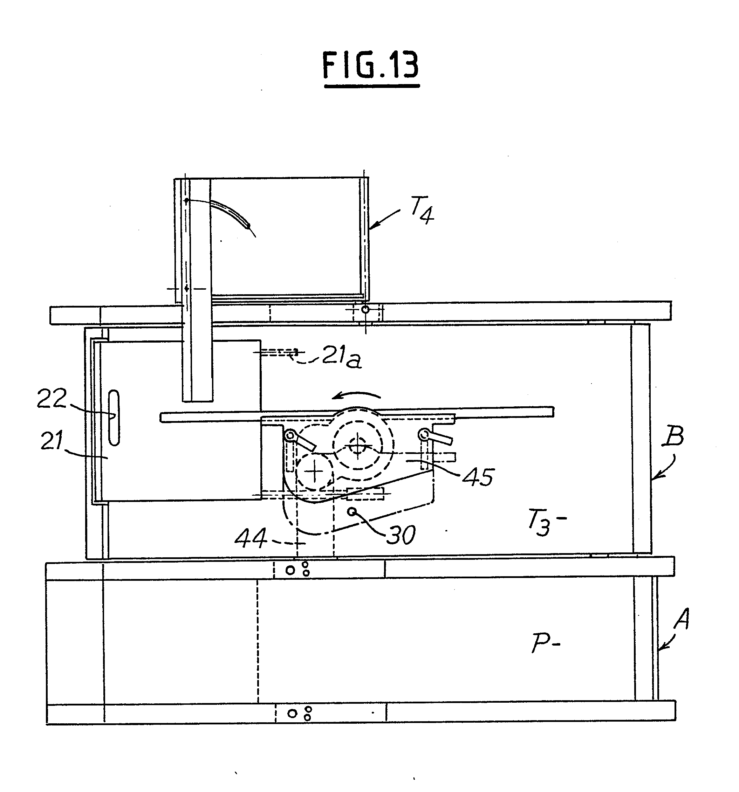

La toupie $O_3$ (Fig.5, 6, 10 et 13) est portée classiquement par un arbre 27 partiellement enfermé dans un carter 28 fixé sous la table de travail $T_3$ correspondante. Cette toupie $O_3$ traverse, perpendiculairement à l'axe principal X-X, un orifice 29 prévu sur ladite table de travail $T_3$ et fait saillie sur ce dernier. Des moyens de réglage (non représentés) connus en soi, tel qu'un dispositif à vis sans fin et écrou, sont prévus pour déplacer l'arbre 27 de la toupie $O_3$ perpendiculairement à l'axe X-X suivant une amplitude modérée. A cet effet, un orifice 30 (Fig.13) est formé sur la table de

travail $T_3$ pour recevoir une partie d'un volant amovible destiné à venir en prise avec les moyens de réglage de la toupie $O_3$ disposée à l'intérieur du bâti mobile B.

Le dispositif d'entraînement de chaque outil de la machine va être maintenant décrit en détail. Le moteur 4 est porté par une tôle fixée au cadre du milieu 1b du bâti fixe A sur laquelle sont, par ailleurs, montés à rotation les galets 12 du palier composite qui supporte le flanc 6 droit du bâti mobile B. L'arbre 31 du moteur 4 tourillonne dans un roulement 32 porté par le bâti fixe et se prolonge, parallèlement à l'axe principal X-X, à travers l'ouverture circulaire 13 ménagée dans le bâti mobile B pour pénétrer dans ce dernier (Fig.5). De plus, cet arbre 31 sur l'extrémité correspondante duquel sont calées autant de poulies motrices que d'outils disposés dans la machine, est excentré par rapport à l'axe principal X-X de telle façon que ce dernier soit situé entre la position d'utilisation des tables de travail et ledit arbre 31 du moteur 4. Cette excentration de l'arbre du moteur associé à une entraînement approprié par poulies et courroies de chaque outil, permet d'entraîner sélectivement l'outil amené en position d'utilisation , la courroie correspondante de cet outil se trouvant alors tendue dans le mesure où ladite position d'utilisation correspond à celle ou l'outil considéré est le plus éloigné de l'arbre 31 du moteur 4.

L'extrémité du bras 14, opposée à celle qui porte la scie circulaire $O_1$, supporte à rotation une poulie de renvoi 33. Le dispositif e'entraînement de sa scie est complété par une poulie motrice correspondante portée par l'arbre 31 du moteur et une courroie 34 sans fin qui s'étend suivant un trajet à peu près triangulaire sur la poulie d'entraînement 14a de la scie, la poulie de renvoi 33 et la poulie motrice correspondante, les gorges de ces trois poulies étant contenues dans un même plan et leur axe de rotation étant parallèle à l'axe principale X-X.

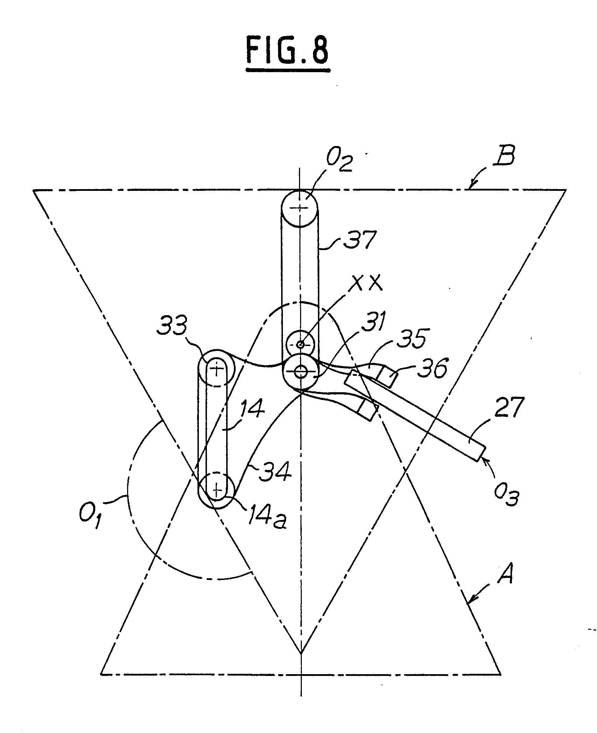

Le dispositif d'entraînement de la toupie $O_3$ comprend une courroie sans fin 35 qui relie une poulie motrice correspondante, portée par l'arbre du moteur, (Fig.5, 6 et 8) à l'arbre 27 de la toupie $O_3$ qui est accessible par une ouverture ménagée dans son carter 28 de protection. Pour assurer l'entraînement de la toupie $O_3$, disposée perpendiculairement à l'arbre 31 du moteur 4, chaque brin de la courroie 35 passe sur un galet 36 ou poulie de renvoi monté à rotation à l'intérieur du bâti mobile B, au voisinage de son flanc 6 droit. Les galets 36 tourillonnent autour d'un axe commun contenu dans le plan passant par la gorge de la poulie motrice à laquelle ils sont associés par la courroie 35.

L'arbre de la raboteuse-dégauchisseuse $O_2$ dont une partie s'étend à l'aplomb du bout d'arbre 31 du moteur 4, en saillie dans le bâti mobile B, est en traîné très simplement par une courroie sans fin 37 qui relie directement une poulie d'entraînement calée sur l'arbre de la raboteuse-dégauchisseuse à une poulie motrice correspondante calée sur l'arbre 31 du moteur (Fig.5, 6 et 8), les gorges de ces poulies étant contenues dans un même plan.

La machine, suivant l'invention, est équipée d'un dispositif d'aspiration entièrement intégré, susceptible de collecter la sciure, les copeaux ou les débris de bois formés au niveau de chaque outil. A cet effet, chacun de ces derniers est associé à un collecteur indépendant formé de gaines. Chaque collecteur a une extrémité située au voisinage de l'outil auquel il est associé. Son extrémité opposée ou extrémité aval, débouche dans le flanc droit 6 du bâti mobile B, en regard du bâti fixe A. Les extrémités aval des collecteurs indépendants qui traversent le bâti mobile B sont réparties radialement autour de l'axe principal X-X sur un même cercle de telle façon que celle de ces dernières, associée à l'outil disposé en position d'utilisation, soit voisine et coaxiale à l'extrémité d'une gaine d'aspiration commune portée par le bâti fixe A cette dernière débouchant à l'extérieur dudit bâti fixe en regard du flanc droit 6 du bâti mobile. Un tel agencement permet de mettre automatiquement en communication le collecteur associé à un outil avec la gaine d'aspiration commune en déplaçant simplement le bâti mobile B autour de l'axe principal X-X.

La disposition des collecteurs et de la gaine d'aspiration entre les bâtis fixe A et mobile B; est telle que l'extrémité correspondante de cette dernière soit adjacente à l'extrémité aval du collecteur associé à l'outil amené en position d'utilisation pour assurer ainsi la communication étanche entre ce collecteur et la gaine d'aspiration.

Le collecteur associé à la scie circulaire $O_1$ (Fig.7 et 12A), comprend une gaine 38 aval qui débouche à une extrémité dans un carter 39 qui, de façon connue en soi, enveloppe la lame de scie $O_3$ à l'intérieur du bâti mobile B, l'extrémité aval opposée de cette gaine 38 traversant le flanc 6 droit du bâti mobile B tel que décrit ci-dessus.

Sous la table de travail $T_2$ de dégauchissage (Fig.9 et 12B), deux buses 40 classiques, par exemple venues de matière avec cette table, sont associées à la raboteuse-dégauchisseuse $O_2$. Chacune de ces buses 40 s'étend sous une demi-table 7, 8 parallèlement à la raboteuse et au voisinage de cette dernière. Ces buses sont outre reliées chacune sur le côté droit du bâti mobile B à une gaine 41, 42 pour former le collecteur associé à la

raboteuse-dégauchisseuse $O_2$. De plus, les gaines collectrices de cette dernière sont raccordées sur un tronçon de gain 43 (Fig.9) qui débouche dans le flanc 6 du bâti mobile B.

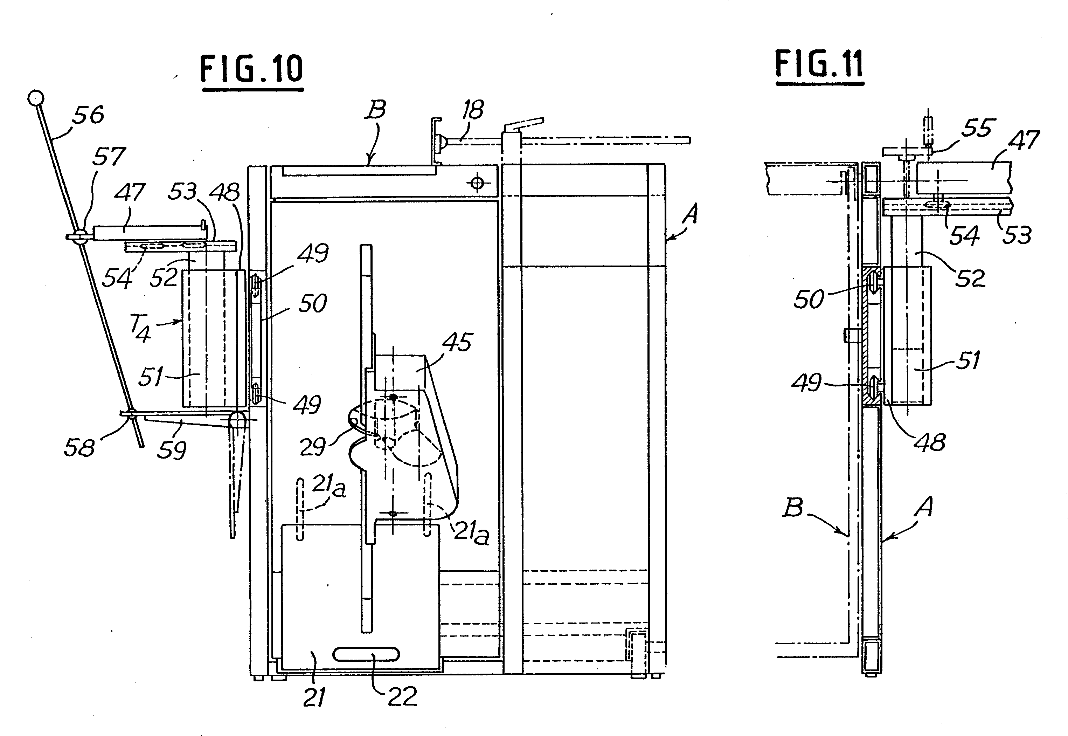

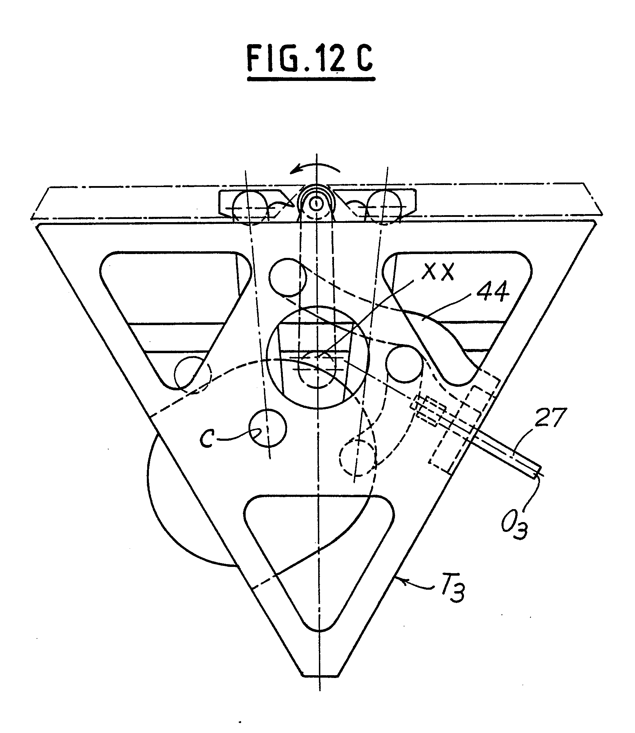

Le collecteur associé à la toupie $O_3$ comporte une gaine 44 collectrice (Fig. 12C et 13) qui débouche, par une extrémité, sur la table de travail $T_3$ de la toupie, au voisinage de cette dernière et sous un carter réglable 45 (Fig.10 et 13) qui capote partiellement la partie de la toupie $O_3$ en saillie sur sa table de travail. L'extrémité aval opposée de ladite gaine 44 traverse, de la façon décrite ci-dessus, le flanc 6 du bâti mobile B.

La gaine d'aspiration 46 (Fig.2, 7 et 9), susceptible d'être associée à chacune des extrémités aval des collecteurs des outils, traverse le bâti fixe A au voisinage du moteur 4 en un emplacement approprié (la projection de cet emplacement sur le bâti mobile B est indiquée en C sur les Fig.12A, 12B et 12C) et s'étend dans le logement réservé à ce dernier pour déboucher à l'extérieur de la machine, derrière celle-ci. Un aspirateur (non représenté) est relié à la gaine d'aspiration 46 par l'intermédiaire d'un bac décanteur (non représenté).

La table auxiliaire $T_4$ fixée au bâti fixe A sur le côté gauche de la machine, est adaptée pour déplacer un plateau 47 suivant trois directions orthogonales deux à deux, c'est-à-dire verticalement, horizontalement et parallèlement à l'axe principal X-X (voir Fig.10 et 11). A cet effet, cette table auxiliaire $T_4$ comprend un premier chariot vertical 48 muni de quatre galets 49 retenus entre deux rails horizontaux sur lesquels ils sont adaptés pour rouler, ces rails étant formés dans un profilé 50 porté par le cadre 1a gauche du bâti fixe A.

Le déplacement vertical du plateau 47 est assuré par l'intermédiaire d'un dispositif à vis et écrou comprenant un écrou sous la forme d'un tube 51 fileté intérieurement, disposé verticalement sur le chariot 48 et une vis 52 adaptée pour être vissée dans le tube 51 fileté, cette vis portant à rotation, à son extrémité supérieure, un deuxième chariot 53 horizontal. Ce deuxième chariot 53 est un profilé délimitant deux rails entre lesquels quatre galets 54 montés à rotation sous le plateau 47, sont susceptibles de rouler pour permettre à ce dernier de se déplacer parallèlement à l'axe principal X-X.

Les moyens de réglage du dispositif à vis et écrou pour le déplacement vertical de la table auxiliaire $T_4$, sont mis en oeuvre à l'aide d'un volant amovible 55 (Fig.11) adapté pour venir en prise avec la vis 52. Par ailleurs, il est prévu des moyens de com mande du déplacement du plateau 47 qui comprennent un levier 56 monté oscillant, d'une part, sur un côté du plateau à l'aide d'une première articulation à rotule 57 et, d'autre part, à l'aide d'une deuxième articulation à rotule 58 située dans un même plan vertical que la première, sur l'extrémité d'un bras 59 articulé sur le bâti fixe A et disposé sous le profilé 50 qui porte le premier chariot de la table auxiliaire $T_4$.

Pour permettre des mouvements horizontaux de grande amplitude ou pour employer des panneaux de bois encombrants, le levier 56 est adapté pour être démonté. Dans ce cas, le bras 59 à l'extrémité duquel il est articulé, est escamoté en l'abaissant (en traits mixtes sur la Fig.10).

Fonctionnement:

La machine étant mise sous tension par l'intermédiaire du tableau de commande 5 et l'aspirateur du dispositif d'aspiration étant mis en marche, la mise en oeuvre de cette machine débute tout d'abord par la sélection de l'outil employé.

A cette fin, l'utilisateur débloque le bâti mobile B et le fait basculer autour de l'axe principal X-X pour amener l'outil requis dans sa position d'utilisation, c'est-à-dire la position dans laquelle la table de travail qui lui est associée, est horizontale.

L'utilisateur verrouille le bâti mobile, dans la position choisie.

Le fait d'amener un outil dans sa position d'utilisation provoque automatiquement l'entraînement sélectif de cet outil de même que la mise en communication sélective du collecteur associé à cet outil, avec l'aspirateur.

C'est ainsi que, si l'on choisit d'utiliser la scie circulaire $O_1$, le fait d'amener la table de travail $T_1$ en position horizontale, provoque la tension de la courroie associée 34 et l'entraînement en rotation de cette scie circulaire $O_1$. Simultanément, l'extrémité aval de la gaine 38 du collecteur associé à cette dernière, est disposée coaxialement et au voisinage de l'extrémité correspondante de la gaine de d'aspiration commune 46 pour transmettre ainsi la dépression générée par l'aspirateur, au carter 39 qui enveloppe la partie de la lame de scie s'étendant à l'intérieur du bâti mobile B. La profondeur du sciage souhaité, est réglée sur la table de travail $T_1$ par l'intermédiaire d'un volant amovible dont une partie est adaptée pour pénétrer dans l'orifice 16 prévue sur cette table afin de coopérer avec les moyens de réglage, connus en soi, qui par pivotement du bras 14 ajustent la hauteur en saillie de la scie sur sa table de travail. De manière classique, le guide réglable 18 et la table auxiliaire $T_4$ peuvent être utilisés en combinaison avec la scie $O_1$ pour commander et contrôler le déplacement de la pièce de bois à ouvrager.

Si l'on souhaite faire une opération de dégauchissage, on amène, tel que décrit précédemment, la table de travail $T_2$ associée à la raboteuse-dégauchisseuse $O_2$ en position d'utilisation. La courroie 37 de la raboteuse-dégauchisseuse $O_3$ est alors tendue par simple rotation du bâti mobile B. Simultanément, l'extrémité aval de la gaine 43 qui relie les gaines 41 et 42 du collecteur de la raboteuse-dégauchisseuse, est disposée coaxialement et au voisinage de l'extrémité correspondante de la gaine d'aspiration 46. L'aspiration des particules de bois est alors automatiquement assurée par l'intermédiaire des buses 40. Le réglage de la profondeur requise pour le dégauchis sage, est effectué en écartant ou en rapprochant, suivant le cas, la demi-table 7 de la table de travail $T_2$ par pivotement des biellettes 9. La demi-table 8 est également positionnée par pivotement des biellettes 9 de façon à s'étendre dans le plan tangent à la génératrice circulaire formée par les arêtes des lames de coupe de la raboteuse-dégauchisseuse en rotation. Par ailleurs, il est possible de rallonger la table de travail $T_2$ sur une ou deux de ses extrémités au moyen des tiroirs 21 qui complètent les tables de travail $T_1$, $T_3$ adjacentes.

Pour utiliser la table de rabotage 20, on conserve l'orientation du bâti mobile B qui vient d'être décrite, c'est-à-dire la raboteuse-dégauchisseuse $O_2$ en position de travail. L'entrée et la sortie du tunnel de rabotage t sont découvertes en enlevant les tiroirs 21 des tables de travail $T_1$, $T_3$ sur lesquelles ils sont disposés. Ces tiroirs 21 peuvent, facultativement selon le choix de l'utilisateur, rallonger une ou chacune des extrémités de la table de rabotage 20. Pour déplacer cette dernière verticalement et régler ainsi la hauteur disponible du tunnel de rabotage t en fonction de la pièce de bois à ouvrager, on manoeuvre le volant amovible 26 disposé sur la table de travail $T_2$, ce qui déplace la vis 25 portant la table 20 à l'intérieur du tube fileté 24.

Lorsqu'on amène en position de travail la table de travail $T_3$ associée à la toupie $O_3$, la courroie 35 est automatiquement tendue grâce à l'excentration de l'arbre 31 du moteur 4. Simultanément, l'extrémité aval de la gaine 44 associée à ladite toupie est disposée coaxialement au voisinage de l'extrémité correspondante de la gaine d'aspiration 46 du dispositif d'aspiration. Cette gaine 44 qui débouche sur la table de travail $T_3$ à proximité de la toupie $O_3$ et sous le carter réglable associé à cette dernière, est ainsi susceptible d'aspirer les particules de bois formées au niveau de ladite toupie. La hauteur de la saillie faite par cette dernière sur sa table de travail $T_3$ peut être réglée suivant une amplitude modérée à l'aide d'un volant amovible qui coopère avec les moyens de réglage prévus à cet effet par l'intermédiaire d'un orifice 30 formé sur ladite table de travail. La pièce de bois à ouvrager sur la toupie $O_3$ peut être avantageusement disposée sur le plateau 47 de la table auxiliaire $T_4$ de façon à guider cette pièce par l'intermédiaire de cette dernière en évitant ainsi à l'utilisateur de placer ses mains au voisinage de l'outil.

La conception entièrement nouvelle, suivant l'invention, de cette machine à bois à plusieurs fonctions résout les problèmes posés par les machines de types classiques tout en apportant de nombreux avantages qui contribuent à faire de la machine à bois de l'invention, un ensemble rationnel, d'une mise en oeuvre simple, rapide et sûre.

Un avantage essentiel est lié à l'association de chaque outil à une table de travail respective qui amène ainsi l'utilisateur non pas à changer d'outil comme cela se fait classiquement mais, de manière originale, à changer de table de travail.

Cette spécialisation des tables de travail supprime les interférences qui existaient traditionnellement sur les machines à table de travail unique, encombrée de plusieurs outils. En effet, l'invention élimine la nécessité d'escamoter ou de démonter et donc, de dérégler les outils de la machine, autres que celui qui est effectivement utilisé.

De même, le fait de ne plus avoir à libérer la place occupée par les outils non utilisés n'implique plus, en conséquence l'obligation de démonter les organes protecteurs desdits outils non utilisés, opération fastidieuse par sa fréquence qui incite l'utilisateur d'une machine classique à négliger l'emploi de ces organes protecteurs au détriment de sa sécurité.

Suivant encore d'autres avantages, l'entraînement automatique de l'outil amené en position d'utilisation, simultanément avec l'élimination automatique des déchets qu'il produit à l'aide du dispositif d'aspiration intégré à la machine, simplifie les manipulations et assure en permanence la propreté de cette dernière sans pour cela demander un effort particulier à l'utilisateur.

Enfin, cette machine de par sa compacité et la conception du bâti mobile de forme prismatique, offre à l'utilisateur un nombre limité de positions de travail ergonomiques en supprimant ainsi les déplacements inutiles de ce dernier autour de la machine et en permettant alors de disposer cette dernière contre un mur, ce qui réduit, en conséquence, son encombrement.

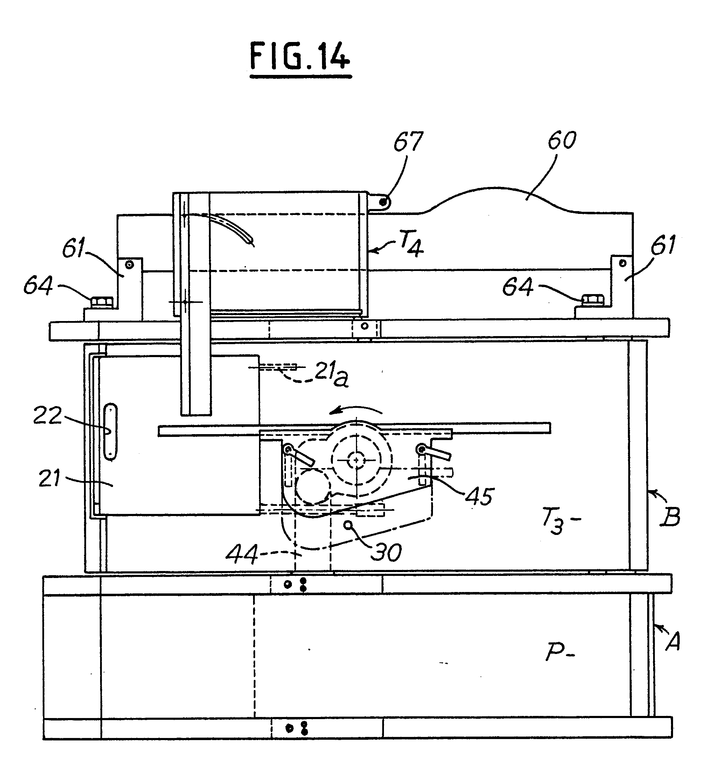

Deux variantes illustrées, respectivement, sur les Fig.14, 15 et 16, 17 contribuent avantageusement, à étendre la polyvalence de cette machine à bois en apportant chacune une fonction complémentaire. Sur les Fig. 14 à 17 précitées, les éléments identiques ou analogues à ceux représentés sur les Figures décrites ci-dessus, sont désignés par les mêmes références numériques.

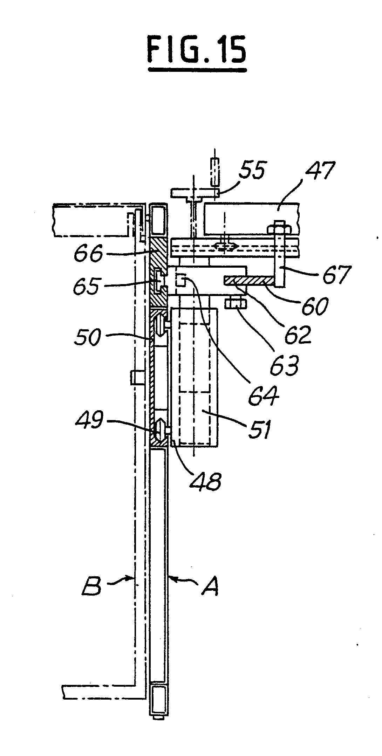

Aux Fig. 14 et 15, la machine est complétée par un dispositif de reproduction du contour d'un ga barit 60 sur un pièce de bois (non représentée) fixée sur le plateau 47 de la table auxiliaire mobile $T_4$. Le découpage ou chantournage de cette pièce est effectué à l'aide de la toupie $O_3$ ou d'un autre outil disposé sur son arbre 27, en fonction du profil requis. Le gabarit 60 présente la forme d'un panneau d'une longueur correspondant à celle des tables de travail du bâti mobile B, qui s'étend sous le plateau 47 de la table auxiliaire $T_4$ et parallèlement à cette dernière de telle façon que le contour à reproduire soit orienté dans la direction opposée à celle de la machine.

Le gabarit 60 est fixé à chacune de ses extrémités sur le cadre gauche 1a du bâti fixe A par l'intermédiaire de pattes 61 qui portent le gabarit en ménageant un espace entre ce dernier et le bâti fixe A afin de ne pas entraver le passage du tube 51 de la table auxiliaire mobile $T_4$ au cours de ses déplacements horizontaux. Les pattes 61 ont chacune à peu près la forme d'un L dont une branche qui s'étend perpendiculairement au bâti fixe porte à son extrémité le gabarit 60 reçu dans une gorge 62 et fixé par un boulon 63. La branche des supports 61 qui s'étend parallèlement au bâti fixe A et, par ailleurs, traversée par un boulon 64 coopérant de manière classique avec un coulisseau 65 en T disposé dans un profilé 66 approprié prévu sur le bâti fixe A, au-dessus du profilé 50 qui porte la table auxiliaire $T_4$. Cette dernière est équipée d'un doigt-palpeur 67 fixé sur un bord du plateau 47, coopérant avec le gabarit 60. En outre, des moyens de fixation de la pièce de bois à chantourner sur la table auxiliaire $T_4$, connus en soi et non représentés, sont bien entendu prévus.

Pour mettre en oeuvre la fonction de chan tournage sur la machine à bois, on dispose les pattes 61 sur le profilé 66 pour les serrer et les bloquer à l'emplacement approprié, à l'aide des boulons 64 vissés dans les coulisseaux 65. Les extrémités du gabarit 60 qui délimitent le contour à reproduire, sont alors introduites dans les gorges 62 des pattes 61 dans lequelles elles sont serrées par l'intermédiaire des boulons 63. Le palpeur 67 étant mis en place, la table de travail $T_3$ associée à la toupie $O_3$ est amenée dans sa position d'utilisation par rotation du bâti mobile B autour de l'axe principal X-X, tel que cela a été décrit précédemment. Après avoir ôté le carter réglable 45 qui capote l'arbre 27 de la toupie $O_3$, l'outil approprié au profil du contour à reproduire est disposé sur ledit arbre et un petit organe protecteur (non représenté) est fixé sur la table de travail $T_3$ de façon à capoter au moins la partie de l'outil orientée dans la direction opposée à la pièce de bois à chantourner. Il suffit alors de fixer cette pièce sur le plateau 47 de telle manière qu'en déplaçant la table $T_4$ perpendiculairement à l'axe principal tout en appliquant conjointement le palpeur 67 sur le contour à reproduire du gabarit 60, l'outil porté par l'arbre 27 coopère avec ladite pièce de bois en y reproduisant ce contour.

Ainsi, par un simple aménagement de la machine, la table auxiliaire $T_4$ peut être avantageusement utilisée en combinaison avec l'arbre 27 de la toupie $O_3$ pour effectuer une opération de chantournage. Mis à part l'intérêt que représente l'extension de la polyvalence d'une telle machine, cet aménagement pour le chantournage présente un intérêt essentiel au plan de la sécurité dans la mesure ou il supprime ce qui est classiquement appelé "le travail à l'arbre" (arbre de la toupie) qui consistait traditionnellement à présenter manuellement la pièce de bois à chantourner à l'outil entraîné en rotation par l'arbre 27 de la toupie $O_3$. L'invention contribue ainsi à diminuer notablement les risques inhérents à l'emploi de tels outils.

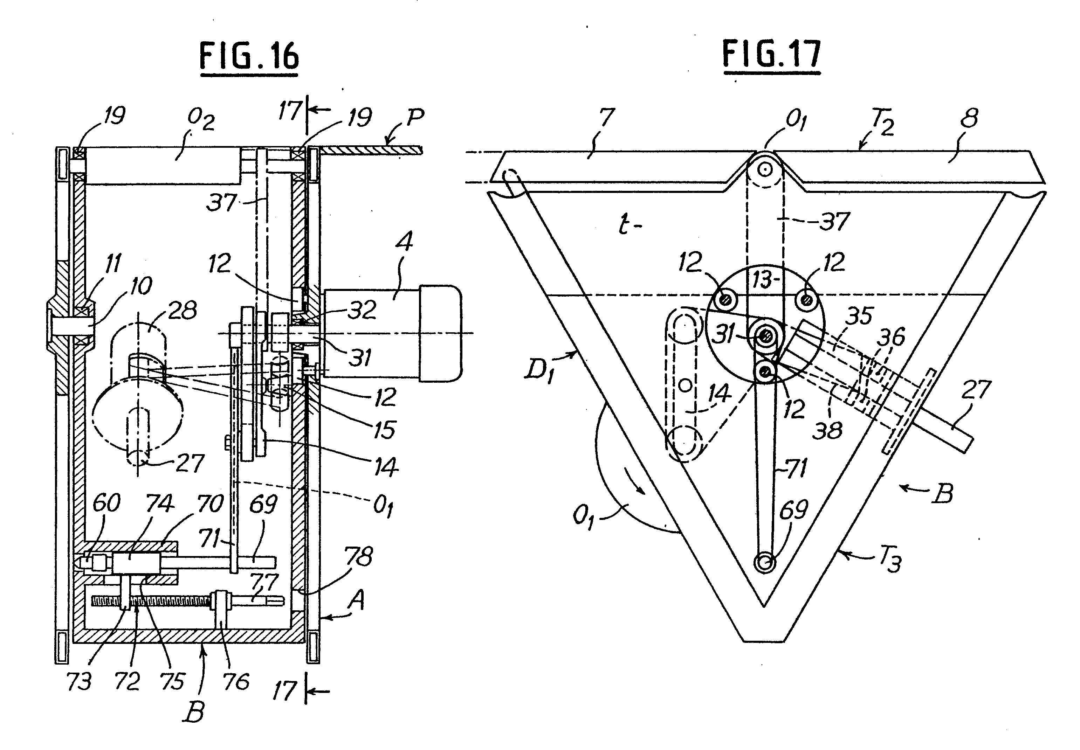

Selon une deuxième variante illustrée sur les Fig. 16 et 17, la machine est équipée d'un mandrin escamotable 68 de mortaisage. Ce mandrin 68 est porté à l'extrémité d'un arbre 69 monté coulissant dans un manchon 70 formé, par exemple par moulage, à l'intérieur du bâti mobile B, ce manchon 70 s'etendant perpendiculairement au flanc gauche 6 du bâti, c'est-à-dire sur le flanc voisin de la table auxiliaire $T_4$, dans l'angle de ce bâti compris entre les tables de travail $T_1$, $T_3$. De plus, pour permettre au mandrin 68 de faire saillie à l'extérieur du bâti mobile B, la partie dudit flanc entourée par le manchon 70 est ouverte.

Afin de bloquer le bâti mobile B dans la position d'utilisation du mandrin 68, un orifice $D_4$ est prévu sur le flanc 6 gauche du bâti mobile, sur le cercle passant par les orifices $D_1$, $D_2$, $D_3$ associés aux autres fonctions de la machine de façon que, lorsque ce mandrin est disposé de manière appropriée, le doigt D pénètre dans cet orifice $D_4$ sous l'action du ressort R.

Le dispositif d'entraînement de l'arbre 69 du mandrin comprend simplement une courroie 71 qui relie directement une poulie motrice correspondante prévue sur l'arbre 31 du moteur 4 audit arbre 69 lui-même.

Les moyens prévus pour escamoter le mandrin 68 à l'intérieur du bâti mobile B comprennent une tige filetée 72 qui coopère avec un écrou 73 solidaire axialement de l'arbre 69. A cet effet, l'écrou 73 est réalisé sous la forme d'une patte percée d'un orifice fileté, traversant une douille 74 qui porte l'arbre 69 à rotation à l'intérieur du manchon 70. La patte 73 formant écrou traverse le manchon 70 au niveau d'une lumière 75 formée dans la direction axiale du mamchon 70 et solidarise axialement l'arbre 69 par son extrémité correspondante qui vient se loger dans une gorge annulaire (non représentée), formée à cet égard sur ledit arbre. La tige 72, tourillonne en outre dans une partie en saillie 76 prévue dans le bâti mobile B afin d'assurer son maintien à l'intérieur de ce dernier. L'extrémité 77 de cette tige 72 opposée à l'écrou 73, est disposée en regard d'un orifice 78 prévu dans le flanc 6 droit du bâti mobile B pour recevoir une partie d'un volant amovible (non représenté) destiné à coopérer avec ladite extrémité 77 dont la section est carrée afin de ménager une prise positive avec ledit volant amovible.

Pour effectuer une opération de mortaisage, le bâti mobile B est orienté autour de l'axe principal X-X de telle façon que le mandrin 68 soit amené dans sa position d'utilisation, c'est-à-dire la position dans laquelle les brins de la courroie 71 s'étendent à peu près verticalement. Ainsi, que cela a été décrit précédemment pour les autres outils de la machine, cette position correspond à celle dans laquelle l'arbre 69 est le plus éloigné de l'arbre 31 du moteur et conjointement, la position dans laquelle la courroie 71 est tendue pour assurer l'entraînement du mandrin 68.

Ce dernier est alors sorti du bâti mobile B à l'intérieur duquel il était escamoté, en tournant dans le sens approprié la tige 72, à l'aide du volant amovible précité, pour déplacer la patte 73 vers le flanc 6 gauche du bâti mobile B, par translation de la douille 74 dans le manchon 70.

Après avoir réglé la hauteur du plateau 47 au moyen du volant amovible 55 (Fig.15), la pièce de bois à ouvrager peut alors être fixée sur ce plateau 47 et amenée en contact de l'outil porté par le mandrin 68 soit par déplacement du plateau 47 lui-même, par exemple, au moyen du levier 56 ou par translation de la douille 74 dans le manchon 70 tel que cela a été décrit précédemment.

La présence de ce mandrin de mortaisage dans la machine permet à cette dernière d'assurer avantageusement une fonction complémentaires. De plus, l'agencement de ce mandrin apporte un perfectionnement important par rapport aux machines à bois traditionnelles dans la mesure où son démontage n'est pas nécessaire, le mandrin étant simplement escamoté à l'intérieur du bâti mobile. Suivant un autre avantage inattendu, les moyens prévus pour escamoter le mandrin à l'intérieur du bâti mobile peuvent judicieusement servir de moyens de réglage de la profondeur du perçage.

De nombreuses autres variantes sont bien entendu envisageables sans sortir du cadre de l'invention. C'est ainsi qu'un aspirateur relié à la conduite commune 46 du dispositif d'inspiration intégré, peut être associé au moteur de la machine et incorporé dans cette dernière. Selon une autre variante, la rotation du bâti mobile B autour de l'axe principal X-X peut être réalisée à l'aide d'un moteur complémentaire.

Suivant encore une autre variante, le flanc 6 du bâti mobile B voisin du moteur 4, peut être supporté à rotation sur le bâti fixe A à l'aide d'un palier de dimension appropriée, disposé coaxialement à l'axe principal X-X. Une bague de ce palier est alors fixée au bâti fixe A, l'autre bague étant fixée au bâti mobile B autour d'une ouverture ménagée dans ce dernier, traversée par l'arbre 31 du moteur 4.

**Revendications**

1. Machine à bois à plusieurs fonctions, comportant un bâti fixe (A), au moins deux outils ($O_1$, $O_2$, $O_3$) susceptibles chacun d'être mis en oeuvre sélectivement par l'intermédiaire d'un dispositif d'entrainement correspondant et un bâti (B) mobile à rotation sur le bâti fixe (A) autour d'un axe principal (X-X) et comportant au moins deux tables de travail ($T_1$, $T_2$, $T_3$), chacune de ces dernières étant associée à au moins un outil et étant susceptible d'être amenée dans une position d'utilisation par rotation du bâti mobile (B) autour de l'axe principal (X-X), caractérisée en ce qu'elle comprend un moteur (4) relié à chacun des dispositifs d'entraînement des outils, fixé sur le bâti (A), l'arbre (31) du moteur s'étendant parallèlement à l'axe principal (X-X) de telle façon que ce dernier soit situé entre la position d'utilisation des tables de travail et ledit arbre du moteur.

2. Machine suivant la revendication 1, caractérisée en ce que le centre de gravité de l'ensemble mobile, formé par la bâti mobile (B) et les éléments qu'il supporte, est situé à peu près sur ledit axe principal (X-X).

3. Machine suivant la revendication 1 ou 2, caractérisée en ce que le bâti mobile (B) est à peu près symétrique par rotation d'un angle déterminé autour de l'axe principal.

4. Machine suivant l'une des revendications 1 à 3, caractérisée en ce que le bâti mobile (B) à la forme d'une prisme droit dont les bases, ayant chacune la forme d'un triangle à peu près équilatéral, sont traversées en leur centre par l'axe principal (X-X) et dont au moins deux faces latérales délimitent chacune une table de travail.

5. Machine suivant l'une quelconque des revendications 1 à 4, caractérisée en ce que sur son côté voisin du moteur (4), le bâti mobile (B) est supporté à rotation sur le bâti fixe (A) à l'aide d'un palier, coaxial à l'axe principal (X-X), dont une bague est fixée sur le bâti fixe (A) et l'autre sur le bâti mobile (B).

6. Machine suivant la revendication 5, caractérisée en ce que la bague fixée sur le bâti mobile, entoure une ouverture ménagée dans ce dernier et traversée par l'arbre (31) du moteur.

7. Machine suivant l'une quelconque des revendications 1 à 4, caractérisée en ce que sur son côté voisin du moteur (4), le bâti mobile (b) est supporté à rotation sur le bâti fixe (A) au moyen d'un palier composite comportant au moins trois galets (12) montés mobiles à rotation sur le bâti fixe et disposés suivant des intervalles angulaires à peu près égaux sur un chemin de roulement circulaire (13), coaxial à l'axe principal.

8. Machine suivant la revendication 7, caractérisée en ce que le chemin de roulement est délimité par la périphérie intérieure d'une ouverture circulaire (13) ménagée dans le bâti mobile et traversée par l'arbre (31) du moteur.

9. Machine suivant l'une quelconque des revendications précédentes comportant une scie circulaire ($O_1$) d'axe de rotation parallèle à l'arbre (31) du moteur et associée à une table de travail ($T_1$), caractérisée en ce que le dispositif d'entraînement de cette scie, comprend un bras (14) monté oscillant sur le bâti mobile, muni à une première extrémité d'une poulie d'entraînement (14a) mobile à rotation et, à son autre extrémité, d'une poulie de renvoi (33) mobile à rotation, une poulie motrice calée sur l'arbre du moteur et une courroie (34) passant sur chacune de ces poulies, les axes de rotation de ces dernières étant parallèles à l'axe principal (X-X) et chacune de leur gorge étant contenue dans un même plan.

10. Machine suivant l'une quelconque des revendications précédentes, comprenant un tunnel de rabotage (t) dans lequel est disposée une table de rabotage (20), adaptée pour être déplacée par rapport à une raboteuse-dégauchisseuse ($O_2$), s'étendant en-dessous de la table de travail associée à cette dernière ($T_2$), caractérisée en ce que les extrémités dudit tunnel débouchent chacune à travers une table de travail ($T_1$, $T_3$) adjacente à cette dernière et sont susceptibles d'être fermées par des panneaux amovibles (21) qui complètent chacun une desdites tables de travail adjacentes.

11. Machine suivant la revendication 10, caractérisée en ce que les panneaux amovibles (21) sont adaptés pour rallonger la table de travail de dégauchissage ($T_2$) et/ou la table de rabotage (20) prévue dans le tunnel de rabotage (t).

12. Machine suivant l'une quelconque des revendications précédentes, caractérisée en ce qu'elle comprend un dispositif d'aspiration intégré adapté pour collecter automatiquement les déchets de bois produits au niveau de l'outil amené en position d'utilisation.

13. Machine suivant la revendication 12, caractérisée en ce que chaque outil ($O_1$, $O_2$, $O_3$) est associé à un collecteur indépendant (38 ; 41, 42 ; 44) dont l'extrémité aval, opposée à l'outil corrspondant, débouche à l'extérieur du bâti mobile (B) en regard du bâti fixe (A), les extrémités aval de ces collecteurs étant réparties radialement sur un même cercle autour de l'axe principal (X-X) de telle façon que celle de ces dernières, associée à l'outil disposé en position d'utilisation, soit voisine et coaxiale à l'extrémité d'une gaine d'aspiration commune (46) qui débouche entre les bâtis fixe (A) et mobile (B).

14. Machine suivant l'une quelconque des revendications 12 et 13, caractérisée en ce qu'un aspirateur relié à la gaine d'aspiration commune (46) du dispositif d'aspiration intégré, est associé au moteur (4) de la machine.

15. Machine suivant l'une quelconque des revendications précédentes, caractérisée en ce qu'elle est munie, sur un flanc, d'une table auxiliaire ($T_4$) adaptée pour déplacer un plateau (47) suivant trois dimensions, cette table auxiliaire ($T_4$) comprenant un premier chariot (48) vertical, monté coulissant horizontalement sur le bâti fixe (A), un deuxième chariot (53) horizontal, monté mobile positivement en translation verticale sur le premier chariot, et le plateau (47) monté coulissant sur le deuxième chariot, parallèlement à l'axe principal (X-X).

16. Machine suivant la revendication 15, caractérisée en ce qu'il est prévu des moyens de commande du déplacement du plateau (47) comprenant un levier (56) articulé, d'une part, sur le côté du plateau et, d'autre part, sur l'extrémité d'un bras (59) porté par le bâti fixe (A).

17. Machine suivant la revendication 16, caractérisée en ce que le bras (59) est articulé sur le bâti fixe (A) de façon à pouvoir être escamoté.

18. Machine suivant l'une quelconque des revendications 15 à 17, caractérisée en ce qu'elle comporte un dispositif pour la reproduction du contour d'un gabarit (60), associé à la table auxiliaire ($T_4$).

19. Machine suivant l'une quelconque des revendications 15 à 18, caractérisée en ce qu'elle comporte un mandrin (68) de mortaisage, escamotable à l'intérieur du bâti mobile (B).

20. Machine suivant la revendication 19, caractérisée en ce que le mandrin (68) porté à l'extrémité d'un arbre (69), est disposé à l'intérieur du bâti mobile (B) dans la région d'un angle délimité par deux tables de travail ($T_1$, $T_2$) de façon à pouvoir s'étendre à l'extérieur du bâti mobile (B), à travers le flanc de ce dernier, voisin de la table auxiliaire ($T_4$), parallèlement à l'axe principal (X-X).

21. Machine suivant l'une des revendications 19 et 20, caractérisée en ce que les moyens prévus pour escamoter le mandrin (68) à l'intérieur du bâti mobile (B) comprennent une douille (74) dans laquelle est monté à rotation et retenu axialement l'arbre (69) du mandrin (68), cette douille (74) étant montée coulissante dans un manchon (70) formé, à l'intérieur du bâti mobile (B) sur le flanc correspondant, autour d'une ouverture susceptible d'être traversée par le mandrin (68) et un dispositif de commande du déplacement de la douille à l'intérieur du manchon (70).

22. Machine suivant la revendication 21, caractérisée en ce que le dispositif de commande du déplacement de la douille (74) à l'intérieur du manchon (70) comprend une patte (73) qui traverse une lumière (75) formée dans la direction axiale du manchon (70), une extrémité de cette patte étant fixée à l'arbre (69), l'extrémité opposée formant un boulon qui coopère avec une tige filetée (72).

# FIG.1

# FIG.2

**FIG.3**

**FIG.4**

# FIG.5

# FIG.6

0 254 788

# FIG.7

# FIG.8

# FIG.9

**FIG.11**

**FIG.10**

# FIG.12 A

# FIG.12 B

# FIG.12 C

# FIG.13

# FIG.14

# FIG.15

**FIG.17**

**FIG.16**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-2 743 746 (DAVISON) <br> * Revendication 1 * | 1 | B 23 Q  39/02 |
| | --- | | |
| X | GB-A-  768 148 (PARKER) <br><br> * Revendications 1,2,4 * | 1,3,5, 12,14 | |
| Y | | 19,21, 22 | |
| | --- | | |
| X | DE-C-  431 800 (BARTMANN) <br> * Page 2, lignes 40-42 * | 1,11 | |
| A | | 10 | |
| | --- | | |
| X | GB-A-  658 250 (HOBBS) <br><br> * Page 6, lignes 21-38 * | 1,12, 13 | |
| | --- | | |
| X | DE-B-1 166 448 (HOLTHAUS) <br> * Colonne 3, lignes 36-39 * | 1,15 | |
| | --- | | |
| Y | FR-A-1 594 086 (PIEMONT) <br> * Revendication 8; figure 6 * | 19 | |
| | --- | | |
| Y | FR-A-  459 156 (GUILLIET) | 21,22 | |
| | ---                     -/- | | |

**DOMAINES TECHNIQUES RECHERCHES (Int. Cl.4)**

B 23 Q
B 27 F
B 27 G
B 27 C

Le présent rapport de recherche a été établi pour toutes les revendications

| Lieu de la recherche | Date d'achèvement de la recherche | Examinateur |
|---|---|---|
| LA HAYE | 08-04-1987 | DE GUSSEM J.L. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

OEB Form 1503. 03 82

| Catégorie | Citation du document avec indication, en cas de besoin, des parties pertinentes | Revendication concernée | CLASSEMENT DE LA DEMANDE (Int. Cl.4) |
|---|---|---|---|
| **DOCUMENTS CONSIDERES COMME PERTINENTS** | | | Page  2 |
| A | FR-A-2 167 572  (HALDEMANN) | 1 | |
| | --- | | |
| A | DE-C-  307 415  (ANDERSEN) | 16 | |
| | --- | | |
| A | US-A-2 854 560  (HILL) | · 16 | |
| | --- | | |
| A | DE-B-1 114 309  (ZANINI) | 1 | |
| | ----- | | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 08-04-1987 | DE GUSSEM J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82